(19) Europäisches Patentamt

European Patent Office

Office européen des brevets

(11) **EP 1 207 454 A1**

(12) **EUROPEAN PATENT APPLICATION**

(43) Date of publication:
    **22.05.2002 Bulletin 2002/21**

(51) Int Cl.⁷: **G06F 9/445**

(21) Application number: **00811077.7**

(22) Date of filing: **15.11.2000**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **International Business Machines Corporation**<br>**Armonk, NY 10504 (US)**<br><br>(72) Inventors:<br> • **Baentsch, Michael**<br>  **CH-8135 Langnau am Albis (CH)**<br> • **Buhler, Peter**<br>  **CH-8803 Rueschlikon (CH)** | • **Eirich, Thomas**<br>  **CH-8804 Au (CH)**<br> • **Höring, Frank**<br>  **CH-8006 Zurich (CH)**<br> • **Oestreicher, Marcus**<br>  **CH-8004 Zurich (CH)**<br> • **Weigold, Thomas D.**<br>  **CH-8134 Adliswil (CH)**<br><br>(74) Representative: **Williams, Julian David**<br>**International Business Machines Corporation,**<br>**Säumerstrasse 4**<br>**8803 Rüschlikon (CH)** |

(54) **Java run-time system with modified linking identifiers**

(57)     A Java run-time system comprises a stacked-based interpreter for executing a Java program (10) being comprised of Java bytecode instructions (20) and Java class structures (30), a converter (100) for mapping standard Java symbolic linking strings (80) contained in a downloaded Java program (10) onto linking identifiers (65), and an export table (40) for storing linking identifiers (65) generated by the converter (100) to bind a reference in a bytecode instruction (20) to be executed to a corresponding link target (90). Said Java run-time system is in particular suitable for embedded microcontrollers on smart cards.

Fig. 2

**Description**

Field of the Invention

The present invention relates to bytecode download and linking performance in resource constraint Java run-time environments, such as JavaCards.

Background and Prior Art

Since chip cards were introduced for public telephones in the 1980s, the chip card business has been rapidly growing concerning economic and technological aspects. Former simple storage chip boards evolved to modern smart cards with their own microprocessor and operation system. The integrated microprocessor allows smart cards to operate independently and not influenced by its environment. Such smart cards are able to execute cryptographic algorithms or check passwords locally before releasing data stored on the smart card. Therefore, electronic cash transactions can be performed without the need of an expensive online connection to host systems. Another important area for applications of smart cards is consumer electronics. Mobiles and set-top-boxes have already adopted smart card technology.

One of the major obstacles impeding the propagation of smart cards is the fact that the operation systems used in smart cards are mainly proprietary solutions of the card manufacturers. Moreover, on conventional smart cards no clear distinction between the operation system and the applications is carried out resulting in time-consuming and expensive developing processes.

In order to handle these problems, Java technology has been applied on smart cards. Java is a programming language and an environment developed by Sun Microsystems, Inc. 2550 Garcia Ave., Mountain View, CA 94043-1100, U.S.A.; the term "Java" is a trademark of this company.

The Java programming language is a high-level language which can be characterised as architecture-neutral. Java programming language is both compiled and interpreted. With a compiler, a Java source code is first translated into an intermediate code, so-called Java bytecode. The bytecode instructions combined by the Java compiler in a so-called class file are interpreted by an interpreter on a Java platform. The Java platform, so-called Java virtual machine (Java VM) is a software-only platform that runs on top of other hardware-based platform such as Windows, Linux and McOS. The Java interpreter is an implementation of the Java VM on the specific hardware-based platform of a computer and runs each bytecode instruction of a class file on the associated computer.

Since Java is an interpreted programming language defined independently of a particular hardware basis and featuring high-level language operations, it is extremely well-suited for use in devices with an embedded microcontroller, such as smart cards. However, due to a size constraint of the embedded microcontroller in smart cards, in particular with respect to its memory space neither the full Java language set nor the complete execution and loading performance as defined for Java on PCs can be sustained in smart cards.

Therefore, it is a common technique to convert the regular PC-oriented Java class file format into a format being suitable for loading and execution on embedded microcontrollers. Such a technique for smart cards is known as JavaCard using a subsetted Java interpreter for embedded microcontrollers. According to JavaCard technology, Java standard class files are pre-processed and converted in a so-called cap file format. The generated cap files contain a much more compact representation of run-time information about the classes and of the bytecodes.

A space-efficient format in Java cap files should especially address the representation of linking information on the embedded microcontroller of the smart card. Linking information is used to specify the location of items which are exported to and addressable by downloaded bytecode instructions. The bytecode instructions may contain references which name target items they refer to. In standard Java class files, the references to be linked are grouped in a table, so-called constant pool, wherein the references refer to their target items by using symbolic linking strings encoded in Utf8. During a downloading and linking process, the interpreter of the Java VM looks up the target items referred to in the bytecode instructions by name and replaces the references then with corresponding run-time specific identifiers, typically addresses. According to standard Java procedures, the symbolic linking strings stored in the constant pools of the Java class files are kept in an export table on the Java VM during execution of the Java program to enable a linking of class files being downloaded at a later stage against already downloaded class files. This standard Java loading and linking mechanism is, however, not applicable to embedded microcontroller environments, in particular not to smart cards, because the export table of the Java VM which has to store references as symbolic linking strings would take up an excess of memory space.

Thus, in JavaCard technology, the cap file format pre-processed and converted from standard Java class file format uses a compact representation of linking information. In JavaCard cap files, references to be linked are stored in the constant table as short integers, so called tokens, which are offsets, indices or addresses dependent on the type of target item to be referred to. The mapping of the symbolic linking strings of the constant pool of standard Java class files to the tokens in the constant pool of JavaCard cap files is carried out by the cap file generator during the conversion step by using a mapping table, a so-called export file. This export file includes information for the cap file generator how to map the symbolic linking strings for target items to the corresponding tokens. During a downloading and linking process of a JavaCard cap file, the interpreter of the JavaCard VM looks up the references in the bytecode instructions by the tokens stored in the constant table and replaces them by associated run-time specific identifiers. The tokens of the constant table of the cap file are stored by the JavaCard VM in an export table during execution to allow for cap files being downloaded later to be linked against already downloaded cap files.

By using an additional export file in the cap file generator to map symbolic linking strings of standard Java class files to tokens in JavaCard cap files, there is a risk of an incorrect export file resulting in a cap file containing incorrect tokens. In consequence, during the linking process the tokens of the cap file may be replaced by wrong run-time specific identifiers causing an incorrect behaviour of the Java program executed on the embedded microcontroller. Further, the need of a mapping procedure of symbolic linking strings to tokens leads to a complicated conversion process of standard Java class files into JavaCard cap files.

Summary of the Invention

According to the present invention. a Java run-time system downloads and links a Java program containing Java bytecode instructions, Java class structures and standard Java symbolic linking strings by mapping the standard Java symbolic linking strings on linking identifiers to be stored in an export file wherein the linking identifiers are suitable to bind references in bytecode instructions to be executed to corresponding link targets.

This inventive downloading and linking concept is especially suitable for resource constraint Java run-time systems being ported on embedded microcontrollers of smart cards. According to the invention the linking information is not stored in the original Java format but as tokens which are computed by the Java run-time system at installation time. This procedure saves a substantial amount of memory space on embedded microcontrollers. Moreover, in contrast to the downloading and linking procedure according to standard JavaCard technology the cap files for an application or a library on a resource constraint Java run-time environment can be pre-processed without an additional converting step by the cap file generator to map the standard Java symbolic linking strings of the constant pool to tokens. In consequence, no additional linking information such as export files is necessary to translate standard Java class files to Java cap files. According to the inventive concept the downloading and linking process is performed by using the original full symbolic linking strings of Java class files to avoid errors which may take place when replacing this symbolic linking strings by tokens in the pre-processed cap files. In summary, the inventive concept combines the run-time space efficiency of standard JavaCard technology with the high flexibility of standard Java linking scheme enabling an effective and reliable linking performance.

In a preferred embodiment a converter of the Java run-time system is adapted to use a parameterized hash function to map the standard Java symbolic linking strings on linking identifiers, the parameter for the hash function being contained in the downloaded Java program. The use of a hash function ensures an effective mapping of long Java symbolic linking strings onto short tokens, such as numbers. The use of a parameter for the hash function guarantees that different symbolic linking strings are never mapped to the same token.

Embodiments of the present invention advantageously achieves an efficient linking in a resource constraint Java run-time environment. Embodiments of the present invention also achieve a space and run-time efficient linking in such a resource constraint Java run-time environment. Furthermore, embodiments of the present invention make conversion of a standard Java class file into JavaCard cap file as easy as possible. Further, advantageous arrangements and embodiments of the invention are set forth in the respective subclaims.

Brief Description of the Drawings

Preferred embodiments of the present invention will now be described, by way of example only, with reference to the accompanying drawings, in which:

Fig. 1 illustrates the downloading linking and performance by a standard JavaCard run-time environment;

Fig. 2 illustrates the downloading and linking performance by the herein proposed adapted JavaCard run-time system;

Fig. 3 is a block diagram of a Java run-time system embodying the present invention;

Fig. 4 is a block diagram of a Java development kit embodying the present invention; and,

Fig. 5 is a flow chart illustrating an example of method for downlaoding and linking Java program in acorndance with the present invention.

Description of a Preferred Embodiment

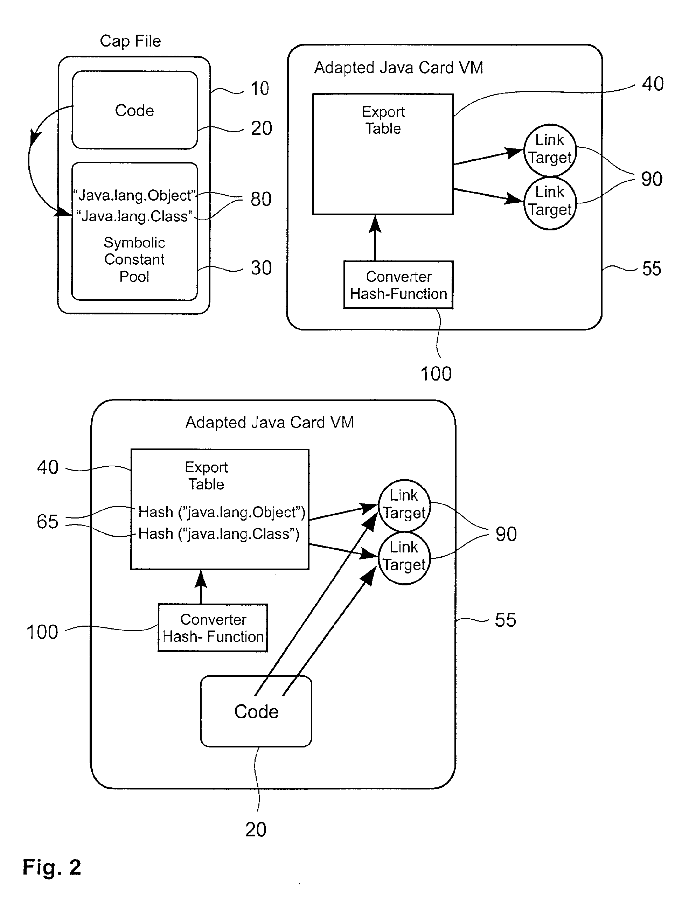

With general reference to the Figures and with special reference to Fig. 2 the essential steps of a preferred embodiment of the invention are explained in detail. Hereby reference is made to Java technology. It is assumed that a person skilled in the art is familiar with the basic mechanism of Java programming language and Java virtual machine (Java VM). Moreover, the present description deals with details of a subsetted Java VM herein referred to as JavaCard VM which is in particular suitable for embedded microcontrollers on smart cards.

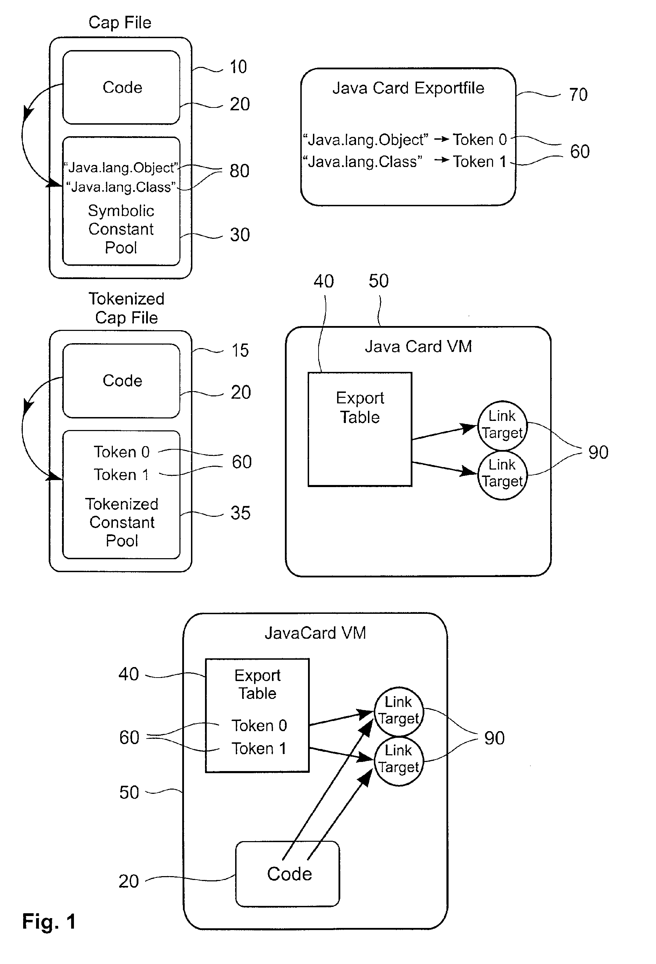

Due to a size constraint on embedded microcontrollers, JavaCard technology uses only a subsetted JavaCard language and a subsetted Java interpreter. As shown in Fig. 1, compiled standard Java programs including Java bytecodes, so-called Java class files, are converted into a subsetted Java file format 10, so-called Java cap file format, which is suitable for being downloaded and executed on embedded microcontrollers.

JavaCard cap files 10 are divided into sections. The first section, the code section 20, contains run-time information about the class, its fields and methods, and bytecode instructions. The code section 20 references all symbols (classes, methods, etc.) those actual addresses are not known before linking time via an offset into the second section 30 of the cap file, so-called constant pool.

In standard class files, the constant pool 30 groups all the references to be linked by using symbolic linking strings 80 encoded in Utf8. For example, a symbolic linking string "Java/lang/object" refers to a class with the name "object" in a Java package with the name "Java/lang". The code section 20 and the constant pool 30 of the standard class files provide sufficient information for execution on a Java VM 50 which is ported on an embedded microcontroller of a smart card. During the linking process, an interpreter looks up the referenced items in the constant pool 30 by name and replace the unresolved locations, i.e. the not yet to machine representation converted locations, with corresponding run-time specific identifiers. The symbolic linking strings 80 of the constant pool 30 are stored during execution in an export table 40 of the Java VM 50 to allow for class files which are downloaded later to be linked against already downloaded class file.

Since the symbolic linking strings 80 used in the constant pools 30 of standard Java class files take up a large memory space in JavaCard cap files a much more compact representation of these symbolic linking strings 80 is employed. As shown in Fig. 1, the standard symbolic linking strings 80 of the constant pool 30 of the class file are mapped by a cap file generator to short integers, so-called tokens 60. The mapping of the symbolic linking strings 80 of the standard constant pool 30 to these tokens 60 is carried out by the cap file generator with the help of an additional file 70, so-called JavaCard export file, to assign the symbolic linking strings 80 to the corresponding tokens 60.

At the downloading and linking time the JavaCard VM 50 combines the references in downloaded bytecode instructions to the link targets 90 by mapping the tokens 60 grouped in the tokenized constant pool 35 of the JavaCard cap file 15 to the corresponding link targets 90. The tokens 60 of the tokenized constant pool 35 are kept during execution in an export table 40 of the JavaCard VM 50 to ensure that cap files which are downloaded at a later stage may be linked against already downloaded classes.

The downloading and linking performance of standard JavaCard technology with a tokenized constant pool 35 allows a compact storage of the tokens 60 on the embedded microcomputer which ports the JavaCard VM 50. However, the need of an additional export file 70 to assign standard Java symbolic linking strings to corresponding tokens does not provide enough flexibility of allowing different implementations of cap file generators. All the tokenized cap files 15 which are downloaded and linked on a specific JavaCard VM 50 have to be processed with the same export file 70, otherwise the behaviour of a Java application on the embedded microcontroller is unpredictable. This also applies if an incorrect export file 70 is used.

In preferred emobidments of the present invention, the run-time space efficiency of standard JavaCard technology is combined with the flexibility of the standard Java linking scheme. Referring to Figure 2, in preferred embodiments of the present invention, standard Java class files of a Java program are pre-processed and converted by a cap file generator to JavaCard cap files 10, wherein constant pools 30 contain the original Java symbolic linking strings for externally and internally referenced items. Further, an adapted JavaCard VM 55 is used including an additional converter 100. During the downloading and linking process, the converter 100 of the adapted JavaCard VM 55 executes a mathematical algorithm, so-called hash function, on the standard symbolic linking strings 80 of the constant pool 20 of the downloaded cap file 10. The hash function 100 generates, for each symbolic linking string 80, a short token 65, preferably a number. These tokens 65 are used to replace the symbolic linking strings 80 in the constant pool 20 of the cap file 10 and are further stored in the export table 40 of the adapted JavaCard VM 55. During the linking process the adapted JavaCard VM 55 looks up the referenced items in the bytecode instructions by the tokens 55 generated with the hash function and then replaces these references by the corresponding run-time specific identifiers.

Whenever a further cap file 10 is downloaded by the adapted JavaCard VM 55, its symbolic linking strings 80 are converted on the fly by applying a respective hash function in the converter 100 to generate associated tokens 65. By using these tokens 65, the appropriated linking information for the bytecode instructions can be found and the associated run-time specific identifiers can be inserted.

In preferred embodiments of the present invention, the converter 100 of the adapted JavaCard VM 55 employs a parameterized hash function to map the symbolic linking strings 80 of the constant pool 20 of the cap file 10 to associated tokens 65. This parameter is preferably calculated by the cap file generator, i.e. the Java compiler, which translates the Java source file in the corresponding cap file format 10 suitable for downloading and executing on embedded microcontrollers. The parameter which is stored in the constant pool 20 of the cap file 10 to be downloaded on the adapted JavaCard VM 55 is used by the parameterized hash function to avoid generation of the same token 65 for two different symbolic linking strings 80. The parameter supplied with the constant pool 20 guarantees that two symbolic linking strings 80 in the constant pool 20 naming two different items will never be mapped to the same token 65 by the parameterized hash function.

The parameter for the constant pool 20 of the cap file 10 may be calculated by the cap file generator as follows. The cap file generator may check the symbolic linking strings 80 included in the constant pool 20 of the cap file 10 and varies a start parameter until it finds a parameter which satisfies the condition that the hash function to be used in the adapted JavaCard VM 55 maps all symbolic linking strings 80 on different tokens 65. To create a parameter for a JavaCard cap file 10, the cap file generator only needs to know the corresponding hash function used in the JavaCard VM 55.

With this concept dependent on the hash function used, it is possible to achieve a typical token size of 16 bits on an embedded microcontroller of a smart card.

An example for a hash function and its parameterization may be as follows:

For mapping of strings 80 to numbers, a possible hash function may be

$$F(string) = k(1) * c(1) + k(2) * c(2) + ... + k(n) * c(n)$$

where c(i) is the character at the position i of the string to be mapped and the k(i) is a corresponding constant for this position.

In practice, however, only a limited number of different constants k(i) will be used for a hash function. For example, the constants c(k) with k > z may be mapped to the constants c(j) with j < z where j = k mod z in the hash function.

An example:

$$z = 2, k(1) = 1, k(2) = 3, string\ 1 = 'abd', string\ 2 = 'aca'$$

$$F(string1) = 1 * 'a' + 3 * 'b' + 1 * 'd'$$

$$F(string2) = 1 * 'a' + 3 * 'c' + 1 * 'a'$$

Dependent on the number of different constants used, there may be strings 80 which are mapped to the same numbers. If such a string 80 occurs, at least one of the constants of the hash function may be varied by the cap file generator to avoid a number clash. The varied constant may then be stored as a parameter together with the strings 80 in the constant pool 20 of the cap file 10 to be used by the converter 100 of JavaCard VM to correctly map the strings 80 in the constant pool 20 of the cap file 10 to numbers.

In a preferred embodiment of the present invention, an adapted JavaCard virtual machine 55 is ported on an embedded microcontroller of a smart card which includes a converter 100 to map the standard Java symbolic linking strings 80 contained in downloaded cap files 10 on corresponding tokens 65 thus saving a substantially amount of memory on the embedded microcontroller. Moreover, the downloaded cap files 10 still contain the original Java symbolic linking strings 80 to avoid a pre-processing step of mapping these symbolic linking strings 80 to tokens 65 which may be at fault.

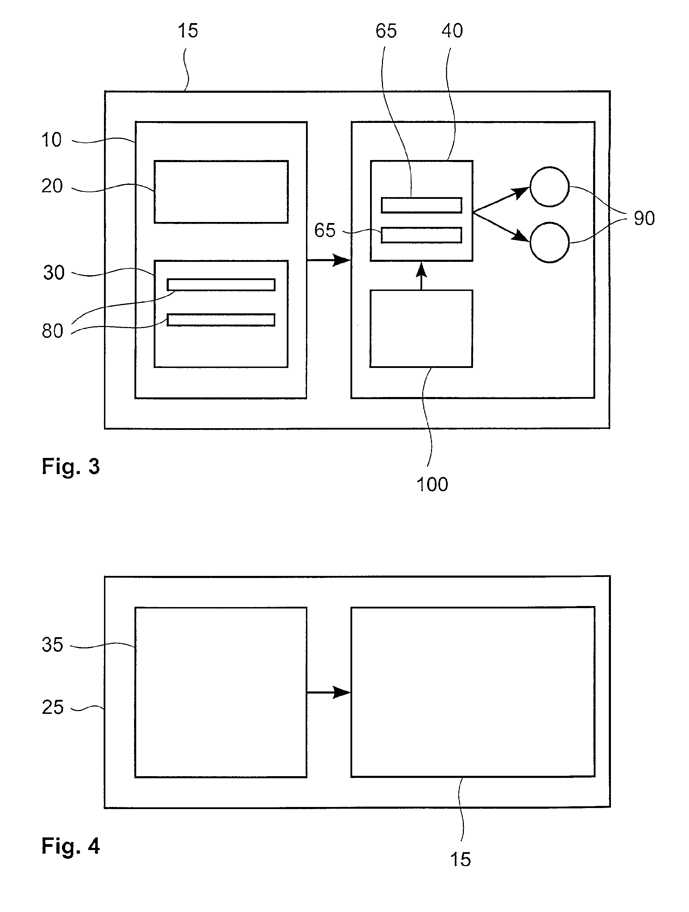

Referring to Figure 3, in a preferred embodiment of the present invention, there is provided a Java run-time system 15 comprising a stacked-based interpreter 55 for executing a Java program 10 comprising Java bytecode instructions 20 and Java class structures 30; a converter 100 for mapping standard Java symbolic linking strings 80 contained in a downloaded Java program 10 onto linking identifiers 65. The system also comprises an export table 40 for storing linking identifiers 65 generated by the converter 100 to bind a reference in a bytecode instruction 20 to be executed to a corresponding link target 90. The converter 100 may be adapted to use a hash function to map the standard Java symbolic linking strings 80 onto linking identifiers 65. The converter 100 may be more specifically adapted to use a parameterized hash function to map the standard Java symbolic linking strings 80 onto linking identifiers 65, the parameter being contained in the Java program 10 to be downloaded. The Java run-time system may be conveniently ported on an embedded microcontroller of a smart card. there is provided a Java development kit 25 comprising a Java run-time system 15 as shown in Figure 3 and a Java conversion system 35 for calculating a parameter for standard Java symbolic linking strings 80 of a Java program 10 to be downloaded on the Java run-time system.

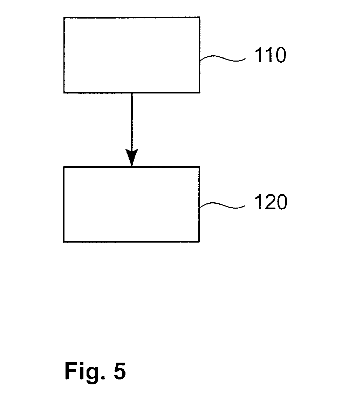

Referring to Figure 5, in yet another preferred embodiment of the present invention, there is provided a method for downloading and linking a Java program on a Java run-time system comprising a stack-based interpreter 50 for executing bytecode instructions, said Java program 10 comprising Java bytecode instructions 20 and Java class structures 30 and including Java standard symbolic linking strings 80 to bind a reference in a bytecode instruction 20 to be executed to a corresponding link target 90. The method comprises, at step 110, mapping the Java standard symbolic linking strings 80 to linking identifiers 65; and, at step 120, storing said linking identifiers 65 in an export table 40. A hash function may be used to map the standard Java symbolic link strings 80 onto linking identifiers 65. More specifically, a parameterized hash function is used to map standard Java symbolic linking strings 80 onto linking identifiers 65, said parameter being included in the Java program 10 to be downloaded. The parameter for the Java program 10 to be downloaded may be used to ensure that the hash function does not map two symbolic linking strings 80 of Java program 10 to the same linking identifier. In yet another embodiment of the present invention, there is provided a computer program including program code means to carry out such a method in case the program is performed on a computer, preferably an embedded microcontroller of a smart card. Such a program may be stored, for example, on a computer readable data carrier.

In the foregoing specification the invention has been described with reference to a preferred embodiment thereof. It will be, however, evident that various modification and changes can be made without departing from the broader scope of the invention as set forth in the appended claims. The specification and the drawings are accordingly regarded as illustrative rather than in a restrictive sense.

**Claims**

1.  Java run-time system comprising

    a stacked-based interpreter (50) for executing a Java program (10) comprising Java bytecode instructions (20) and Java class structures (30);
    a converter (100) for mapping standard Java symbolic linking strings (80) contained in a downloaded Java program (10) onto linking identifiers (65); and
    an export table (40) for storing linking identifiers (65) generated by the converter (100) to bind a reference in a bytecode instruction (20) to be executed to a corresponding link target (90).

2.  Java run-time system according to claim 1, wherein the converter (100) is adapted to use a hash function to map the standard Java symbolic linking strings (80) onto linking identifiers (65).

3.  Java run-time system according to claim 1, wherein the converter (100) is adapted to use a parameterized hash function to map the standard Java symbolic linking strings (80) onto linking identifiers (65), the parameter being contained in the Java program (10) to be downloaded.

4.  Java development kit comprising a Java run-time system according to claim 3 and a Java conversion system for calculating a parameter for standard Java symbolic linking strings (80) of a Java program (10) to be downloaded on the Java run-time system.

5.  Java run-time system according to any of the claims 1 to 3 being ported on an embedded microcontroller of a smart card.

6.  Method for downloading and linking a Java program on a Java run-time system comprising a stack-based interpreter (50) for executing bytecode instructions, said Java program (10) comprising Java bytecode instructions (20) and Java class structures (30) and including Java standard symbolic linking strings (80) to bind a reference in a bytecode instruction (20) to be executed to a corresponding link target (90),
    comprising the steps of mapping the Java standard symbolic linking strings (80) to linking identifiers (65); and storing said linking identifiers (65) in an export table (40).

7. Method according to claim 6, wherein a hash function is used to map the standard Java symbolic link strings (80) onto linking identifiers (65).

8. Method according to claim 6, wherein a parameterized hash function is used to map standard Java symbolic linking strings (80) onto linking identifiers (65), said parameter being included in the Java program (10) to be downloaded.

9. Method according to claim 8, wherein the parameter for the Java program (10) to be downloaded is used to ensure that the hash function does not map two symbolic linking strings (80) of Java program (10) to the same linking identifier (65).

10. Computer program including program code means to carry out the method according to any of claims 6 to 9, in case the program is performed on a computer, preferably an embedded microcontroller of a smart card.

11. Computer program including program code means to carry out the method according to any of claims 6 to 9, being stored on a computer readable data carrier.

Cap File

Code — 10
— 20

"Java.lang.Object" — 80
"Java.lang.Class"

Symbolic
Constant — 30
Pool

Java Card Exportfile — 70

"Java.lang.Object" → Token 0 — 60
"Java.lang.Class" → Token 1

Tokenized
Cap File

Code — 15
— 20

Token 0 — 60
Token 1

Tokenized — 35
Constant
Pool

40   50

Java Card VM

Export
Table

Link
Target — 90

Link
Target

JavaCard VM

40 — Export
Table

60 — Token 0
Token 1

50 — 

Link
Target — 90

Link
Target

20 — Code

**Fig. 1**

**Fig. 2**

Fig. 3

Fig. 4

110

120

**Fig. 5**

**European Patent Office**

# EUROPEAN SEARCH REPORT

Application Number

EP 00 81 1077

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 00 46667 A (SUN MICROSYSTEMS INC) 10 August 2000 (2000-08-10) | 1,2,5-7, 10,11 | G06F9/445 |
| Y | * page 1, line 1 - page 12, line 7 * | 3,4,8,9 | |
| Y | LEWIS T G ET AL: "HASHING FOR DYNAMIC AND STATIC INTERNAL TABLES" COMPUTER,IEEE COMPUTER SOCIETY, LONG BEACH., CA, US,US, vol. 21, no. 10, 1 October 1988 (1988-10-01), pages 45-56, XP000118863 ISSN: 0018-9162 * page 45, left-hand column, line 1 - right-hand column, line 13 * * page 50, right-hand column, line 12 - page 51, left-hand column, line 5 * | 3,4,8,9 | |

**TECHNICAL FIELDS SEARCHED (Int.Cl.7)**

G06F

The present search report has been drawn up for all claims

| Place of search | Date of completion of the search | Examiner |
|---|---|---|
| THE HAGUE | 19 April 2001 | Kingma, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

**ANNEX TO THE EUROPEAN SEARCH REPORT
ON EUROPEAN PATENT APPLICATION NO.**                EP 00 81 1077

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2001

| Patent document cited in search report | Publication date | Patent family member(s) | Publication date |
|---|---|---|---|
| WO 0046667 A | 10-08-2000 | AU 3587200 A | 25-08-2000 |

For more details about this annex : see Official Journal of the European Patent Office, No. 12/82